# EUROPÄISCHE PATENTSCHRIFT

(11) **EP 0 723 998 B1**
(45) Veröffentlichungstag und Bekanntmachung des Hinweises auf die Patenterteilung: **29.04.1998**
(21) Anmeldenummer: 96100404.1
(22) Anmeldetag: 12.01.1996
(51) Int. Cl.: C09C 1/00, C09C 3/06, C09C 3/00, C09D 7/12, C08K 9/06, C08K 9/02

(54) **Farbstabiles Bismutvanadat-Gelbpigmente**
Colour-fast yellow bismuth vanadate pigment
Pigment jaune de vanadate de bismuth de couleur stable

(30) Priorität: 25.01.1995 DE 19502196
(43) Veröffentlichungstag der Anmeldung: 31.07.1996
(73) Patentinhaber: BAYER AG, 51368 Leverkusen (DE)
(72) Erfinder: Schittenhelm, Hans-Joachim, Dr., D-51065 Köln (DE); Hill, Rudolf, D-40764 Langenfeld (DE)

(56) Entgegenhaltungen:
- EP-A- 0 239 526
- EP-A- 0 271 813
- GB-A- 2 238 549
- US-A- 4 063 956

## Beschreibung

Die vorliegende Erfindung betrifft farbstabile, beschichtete Bismutvanadat-Gelbpigmente aus einem Kern eines gelbfärbenden Bismutvanadates, ein Verfahren zur Herstellung dieser Pigmente sowie deren Verwendung.

Bismutvanadat-Pigmente finden zunehmend Interesse als Substitutionsprodukte für Cadmium-, Blei- und Chrom(VI)-haltige anorganische Pigmente, die aus ökologischer und toxikologischer Sicht zunehmend kritisch bewertet werden (DE-A 2 727 863 DE-A 3 135 281). Die gelbfärbenden Bismutvanadat-Pigmente sind für Einfärbungen in Kunststoffen und Lacken vorgesehen. Hierbei kommt der Farbgebung von Erzeugnissen, die aus geschmolzenen Polyolefin-Kunststoffen im Spritzgießverfahren hergestellt werden, eine besondere Bedeutung zu. Beim Spritzgießverfahren liegt die Verarbeitungstemperatur aus Gründen der Viskosität zwischen 280 und 320°C.

Bismutvanadat-Pigmente sind in einer Vielzahl von Varianten bekannt. In der Literatur sind Zirkon-haltige (DE-A 4 040 849), Phosphor-haltige (DE-A 4 200 925), Molybdän- und Wolfram-haltige (DE-A 3 221 338, JP 1 313 585), Aluminium- und Silizium-haltige (DE-A 2 727 865) sowie Erdalkali-, Zink-, Molybdän-, Wolfram-, Niob- und Phosphor-haltige (EP-A 0 441 101) Bismutvanadate beschrieben. Zudem sind Bismutvanadate bekannt, die keine Fremdelemente enthalten (DE-A 2 727 864; DE-A 3 315 850; DE-A 4 119 668).

Diese aus dem Stand der Technik hervorgehenden Bismutvanadat-Typen sind in Polyolefin-Kunststoffen bis zu einer Temperatur von 240°C farbstabil. Ein entscheidender Nachteil ist, daß oberhalb von 240°C eine Farbverdunklung eintritt, die mit steigender Temperatur zunimmt und oberhalb von 280°C in eine schmutziggrüne Verfärbung übergeht. Daher sind diese Bismutvanadat-Pigmente als Farbmittel im Spritzgießverfahren nicht einsetzbar.

Zur Verbesserung der Temperaturstabilität wurden die Bismutvanadat-Pigmente mit anorganischen und organischen Materialien umhüllt. So beschreibt DE-A 3 926 870 die Auffällung schwerlöslicher Verbindungen des Eisens. EP-A 0 271 813 berichtet von Molydän-haltigen Bismutvanadaten, die mit Siliziumdioxid, Silanen und Wachsen beschichtet sind. Weiterhin werden in EP-A 0 074 049 Auffälltechniken mit Zirkonsilikat, Aluminiumphosphat, Antimonoxid sowie Überzüge aus Zirkondioxid/Siliziumdioxid erwähnt. Es werden auch Bismutvanadat-Pigmente gemäß US4,063,956 mit einer oder mehreren Schichten aus Siliziumdioxid, Aluminiumoxid, Titandioxid und Boroxid umhüllt.

Den so beschichteten oder behandelten Bismutvanadat-Gelbpigmenten ist gemeinsam, daß sie dem Angriff von geschmolzenen Polyolefin-Kunststoffen bis zu einer Temperatur von 280°C widerstehen. In diesem Gebiet erweisen sie sich als farbstabil. Oberhalb von 280°C kommt es aber auch hier zu einer Farbverdunklung, die bei 300°C in eine schmutziggrüne Verfärbung übergeht.

Aufgabe war es daher, Bismutvanadat-Gelbpigmente zur Verfügung zu stellen, die in geschmolzenen Polyolefin-Kunststoffen oberhalb von 280°C farbstabil sind und in den durch Spritzguß hergestellten Formkörpern ein leuchtendes, brillantes, farbreines Gelb (Gelbsättigung b* ≥ 85, Farbsättigung C* ≥ 85, Helligkeit L* ≥ 85) ergeben. Als Maß für die Farbqualität dienen die Parameter b*, C* und L* aus dem CIELAB-Farbsystem nach DIN 6174 (Ullmanns Encyclopedia of Industrial Chemistry, Vol. A 20, page 246, table 1, pages 258-259, 262-263).

Diese Aufgabe konnte mit den erfindungsgemäßen Bismutvanadat-Gelbpigmenten gelöst werden.

Gegenstand der Erfindung sind daher beschichtete Bismutvanadat-Gelbpigmente aus einem Kern eines gelbfärbenden Bismutvanadates der Zusammensetzung BiVO₄, welche dadurch gekennzeichnet sind, daß der Kern eine mit einer phosphathaltigen Verbindung aktivierte Oberfläche aufweist sowie eine anorganische Umhüllung, die mindestens eine Schicht aus Aluminiumphosphat oder Aluminium/Zinkphosphat oder Siliziumoxid und gegebenenfalls als weitere Schicht Aluminiumoxid und/oder ein Organopolysiloxan enthält, und daß mehr als 99 Gew.-% der Kerne einen Durchmesser zwischen ≥ 0,2 µm und ≤ 3,5 µm aufweisen.

Die erfindungsgemäßen farbstabilen Bismutvanadat-Gelbpigmente erweisen sich in geschmolzenen Polyolefin-Kunststoffen ohne die weitere Schicht eines Organopolysiloxans bis 300°C und mit der äußeren Schicht eines Organopolysiloxans bis hin zu 320°C als farbstabil. Die Farbe der Probekörper, die aus 300 bis 320°C heißen und daher leichtfließenden Schmelzen von Polyäthylen-Kunststoffen im Spritzgießverfahren hergestellt worden sind, ist ein leuchtendes, brillantes, farbreines Gelb (Gelbsättigung b* ≥ 85, Farbsättigung C* ≥ 85, Helligkeit L* ≥ 85). Es sind praktisch keine Farbabweichungen gegenüber Probekörpern aus einer nur 200°C heißen und daher sehr zähflüssigen, wenig aggressiven Schmelze (dE< 3 nach DIN 6174) zu erkennen. Im Temperaturbereich von 300 bis 320°C sind die Schmelzen der Polyolefin-Kunststoffe so dünnflüssig, daß selbst geometrisch komplizierte Teile problemlos im Spritzgießverfahren zu fertigen sind. Die höchsten verarbeitungstechnischen Anforderungen an die Farbstabilität von Bismutvanadaten sind daher mit den erfindungsgemäßen Bismutvanadaten erfüllt.

Bevorzugt werden die aktivierten Oberflächen der gelbfärbenden Bismutvanadat-kerne mit folgenden Umhüllungen beschichtet:
A) innere Siliziumoxidschicht und äußere Aluminiumoxidschicht
B) innere Aluminiumphosphatschicht und äußere Organopolysiloxanschicht
C) innere Aluminium/Zinkphosphatschicht und äußere Organopolysiloxanschicht
D) innere Siliziumoxidschicht und äußere Organopolysiloxanschicht
E) innere Siliziumoxidschicht, weitere Aluminiumoxidschicht, äußere Organopolysiloxanschicht.

Als Organopolysiloxan wird vorzugsweise Dimethylpolysiloxan eingesetzt.

Besonders bevorzugt werden Alkaliphosphate, insbesondere Trinatriumphosphat, als phosphathaltige Verbindung verwendet.

Ein weiterer Gegenstand der Erfindung ist ein Verfahren zur Herstellung der erfindungsgemäßen Bismutvanadat-Gelbpigmente, welches dadurch gekennzeichnet ist, daß salpetersaure Suspensionen aus Bismutylnitrat und Vanadium(V)oxid oder Bismut(III)oxid und Vanadium(V)oxid einer intensiven Scherbeanspruchung unterworfen werden, das dabei entstandene Bismutvanadat nach einer Ruhephase abfiltriert und gewaschen wird, das feuchte Bismutvanadat in einer heißen, phosphathaltigen, wäßrigen Lösung zur Aktivierung der Oberfläche dispergiert wird, anschließend abfiltriert und gewaschen wird, anschließend auf das aktivierte Bismutvanadat in Suspension mindestens ein wasserhaltiges Aluminiumphosphat und/oder Aluminium/Zinkphosphat und/oder Siliziumoxid in einer oder mehreren Schichten - gegebenenfalls in Kombination mit einem oder mehreren Oxiden von zweiwertigen und/oder dreiwertigen und/oder vierwertigen und/oder fünfwertigen und/oder sechswertigen Elementen und/oder einem oder mehreren Phosphaten von zweiwertigen und/oder dreiwertigen und/oder vierwertigen Elementen - aufgefällt wird, dieses so beschichtete Bismutvanadatpigment filtriert, gewaschen und getrocknet wird und gegebenenfalls mit einem Organopolysiloxan nachbehandelt wird.

Als Ausgangsmaterial zur Herstellung der erfindungsgemäßen Bismutvanadat-Kerne dienen bevorzugt salpetersaure Suspensionen aus Bismutylnitrat und Vanadium(V)oxid oder Bismut(III)oxid und Vanadium(V)oxid, wie sie in DE-A 4 119 668 beschrieben sind. Die Ausgangsprodukte werden dort mit Hilfe von Naßmahlverfahren unter Bildung von Bismutvanadat-Gelbpigment zur Reaktion gebracht. Man erhält dabei allerdings Bismutvanadate mit breiter Partikelgrößenverteilung. Die Kerndurchmesser liegen mit > 0 bis 10 µm in einem stark streuenden Bereich.

Im Unterschied zu DE-A 4 119 668 können Bismutvanadat-Kerne mit enger Verteilung (mehr als 99 Gew.-% der Kerne mit Durchmesser zwischen ≧ 0,2 µm und ≦ 3,5 µm) überraschenderweise durch intensive Scherbeanspruchung (z.B. intensives Rühren) der Suspension erhalten werden, bevorzugt wenn das Molverhältnis von Bismut zu Vanadium zwischen 1,16 und 1,20, besonders bevorzugt bei 1,18 liegt und das salpetersaure Milieu der Suspension bevorzugt 36 bis 40 %-ig, besonders bevorzugt 38 %-ig, ist und der Feststoff-Anteil der Suspension vorzugsweise zwischen 40 und 47 Gew.-%, besonders bevorzugt zwischen 41 und 43 Gew.-%, liegt. Abweichungen von diesen Bedingungen führen zu stärker streuenden Kerndurchmessern. Das salpetersaure Milieu der Suspension kann z.B. gebildet werden, in dem Bismutylnitrat und Vanadium(V)oxid zu 17 bis 22 %iger wäßriger Salpetersäure oder Bismut(III)oxid und Vanadium(V)oxid zu 32 bis 37 %iger wäßriger Salpetersäure zugegeben werden.

Die beispielsweise durch intensives Rühren hervorgerufene Umsetzung der Ausgangsprodukte zu kristallinem Bismutvanadat läßt aus der zu Anfang niederviskosen, schmutzig braungrün gefärbten Suspension eine brillantgelbe Masse von sahneartiger Konsistenz entstehen. Hierbei steigt die Temperatur normalerweise auf ca. 70°C an. Zur vollständigen Pigmentbildung ist es vorteilhaft, die Masse während 16 Stunden in Ruhe zu belassen. Im Anschluß daran wird mit Wasser weiter verdünnt, gerührt und die Pigment-Suspension filtriert. Das gewaschene Pigment dient als Ausgangsmaterial für die weitere Behandlung.

Die Aktivierung der Partikeloberfläche erfolgt mit einer heißen, phosphathaltigen, wäßrigen Lösung, besonders bevorzugt erfolgt dies in einer 90°C heißen, 0,1 molaren Trinatriumphosphat-Lösung. Die Bismutvanadat-Kerne werden unter Rühren während einer Stunde dispergiert, wobei Vanadationen teilweise aus der Oberfläche der Bismutvanadat-Kerne herausgelöst werden. Die so aktivierten Bismutvanadat-Kerne werden abfiltriert und mit Wasser von anhaftenden Vanadat-Resten befreit.

Auf die aktivierten Bismutvanadat-Kerne wird wasserhaltiges Aluminiumphosphat oder Aluminium/Zinkphosphat oder Siliziumoxid aufgebracht. Hierfür stehen Auffälltechniken zur Verfügung, wie sie beispielsweise in DE-A 4 037 878 oder US 3 370 971 beschrieben sind. Die aktivierten Bismutvanadat-Kerne werden in Wasser dispergiert. Für die Auffällung der Phosphate werden bevorzugt wäßrige Lösungen von Aluminiumsulfat oder Aluminium- und Zinksulfat und danach wäßrige Phosphorsäure zugegeben. Anschließend werden die Suspensionen mit verdünnter Natronlauge neutral bis schwachsauer gestellt. Die in Wasser dispergierten Bismutvanadat-Kerne können auch mit einer wäßrigen alkalischen Natriumsilikat-Lösung versetzt werden. Anschließend wird der pH mit wäßriger Schwefelsäure erniedrigt und ein wasserhaltiges Siliziumoxid in neutralem bis schwachalkalischem Medium aufgefällt. Die so beschichteten Bismutvanadat-pigmente werden in üblicher Weise filtriert, gewaschen und getrocknet.

Es hat sich als besonders günstig erwiesen, wenn die Menge an aufgefälltem Material nach der Trocknung 3 bis 10 Gew.-%, vorzugsweise 8 bis 10 Gew.-%, bezogen auf das unbehandelte Bismutvanadat beträgt. Größere Mengen als 10 Gew.-% beeinträchtigen die optischen Eigenschaften der Bismutvanadat-pigmente.

Besonders vorteilhaft ist es, die Menge an aufzufällendem Material nicht als eine dicke Schicht in einem Arbeitsgang, sondern nacheinander in mehreren dünnen Schichten auf die Bismutvanadat-Kerne aufzubringen. Hierbei werden die Fällungsreagentien portionsweise zugegeben und nach jeder Zugabe der für die jeweilige Fällung günstige pH-Wert eingestellt. Auf diese Weise lassen sich auch Schichten von Aluminiumphosphat und/oder Aluminium-Zinkphosphat mit Siliziumoxid in beliebiger Reihenfolge kombinieren.

Zur Erhöhung der Farbstabilität von 300°C auf 320°C kann vorzugsweise zusätzlich auf die Umhüllung eine Schicht eines Organopolysiloxans aufgebracht werden. Besonders vorteilhaft ist ein Dimethylpolysiloxan in einer Menge von 2 bis 12 Gew.-%, vorzugsweise 5 bis 10 Gew.-%. Die Behandlung erfolgt vorzugsweise in einer Kugelmühle während 5 Minuten.

Die erfindungsgemäßen Bismutvanadat-Gelbpigmente zeichnen sich dadurch aus, daß sie in geschmolzenen Polyolefin-Kunststoffen auch im Hochtemperaturbereich oberhalb von 280°C bis hin zu 320°C farbstabil sind und daß die Farbe der durch Spritzguß hergestellten Formkörper ein leuchtendes, brillantes, farbreines Gelb (Gelbsättigung b* ≥ 85, Farbsättigung C* ≥ 85, Helligkeit L* ≥ 85) ist.

Zur Erzielung weiterer pigmenttechnischer Eigenschaften, die in anderen Anwendungsgebieten - beispielsweise in Lacken - eine Rolle spielen, kann man auf die mit Aluminiumphosphat und/oder Aluminium/Zinkphosphat und/oder Siliziumoxid beschichteten, aktivierten Bismutvanadat-Kerne weitere Materialien aufbringen, ohne daß die Farbqualität bei hoher Temperatur in Polyolefin-Kunststoffen verloren geht. Solche Materialien können Oxide von zwei-, drei-, vier-, fünf- und sechswertigen Elementen sowie Phosphate von zwei- drei- und vierwertigen Elementen (z.B.: MgO, ZnO, ZnSiO₃, Al₂O₃, Ce₂O₃, CeO₃, ZrO₂, MoO₃, Mg₃(PO₄)₂, Ca₃(PO₄)₂, Zn₃(PO₄)₂) sein. So kann beispielsweise wasserhaltiges Aluminiumoxid aufgefällt werden, wodurch das Glanzverhalten in Lacken verbessert wird.

Die Farbstabilität in Polyolefin-Kunststoffen bleibt ebenfalls erhalten, wenn man die aktivierten Bismutvanadat-Kerne zuerst mit einem der obengenannten Oxide oder Phosphate beschichtet und dann eine oder mehrere Schichten aus Aluminiumphosphat und/oder Aluminium/Zinkphosphat und/oder Siliziumoxid auffällt. Als Beispiele seien Calciumphosphat und Molybdänoxid genannt, welche zu erhöhter Photostabilität in Lacken führen.

Für die Farbqualität der erfindungsgemäßen Bismutvanadat-Gelbpigmente sind daher wichtig:
a) eine enge Größenverteilung der Bismutvanadat-Kerne (mehr als 99 Gew.-% der Kerne mit einem Durchmesser zwischen ≥ 0,2 µm und ≤ 3,5 µm),
b) eine mit einer Phosphat-haltigen Verbindung aktivierte Kernoberfläche und
c) eine Umhüllung, die mindestens eine Schicht aus Aluminiumphosphat oder Aluminium/Zinkphosphat oder Siliziumoxid enthält.

Des weiteren kann als äußere Schicht ein Organopolysiloxan vorhanden sein. Bismutvanadat-Gelbpigmente, die alle drei Kriterien a) bis c) erfüllen, zeichnen sich dadurch aus, daß jede der Farbkoordinaten b*, C und L* einen Wert ≥ 85 in Polyolefin-Kunststoffen und Lacken erreicht und daß die Farbabweichung dE* zwischen bei 200°C und 300°C bzw. 320°C gefertigten Probekörpern aus Polyolefin-Kunststoffen kleiner als 3 ist.

In Gegenwart eines handelsüblichen Titandioxid-Weißpigments beispielsweise sind Bismutvanadat-Gelbpigmente, deren Kerne eine breitere Größenverteilung als die erfindungsgemäßen aufweisen, weniger farbstark. So fallen die Farbkoordinaten b* und C* in Abmischungen mit der fünffachen Gewichtsmenge an Weißpigment auf Werte deutlich unter 40 ab. Bei Verwendung der erfindungsgemäßen Bismutvanadat-Gelbpigmente mit enger Kernverteilung bleiben die Farbkoordinaten dagegen bei Werten > 40.

Die Erfindung soll anhand der nachfolgenden Beispiele näher erläutert werden.

### Beispiele

A) Herstellung der erfindungsgemäßen Zwischenprodukte (Bismutvanadat-Kerne) mit enger Größenverteilung:
   In einem 1 Liter-Becherglas wurden 291,5 g Bismutylnitrat und 77,5 g Vanadiumpentoxid (BET-Oberfläche 4,5 m²/g) in Gegenwart von 60 ml 65 %-iger Salpetersäure und 200 ml Wasser solange mit einem schnellaufenden Rührwerk (Mischturbine vom Typ D 032 s der Firma Kotthoff, Rührerdrehzahl 1 000 U/min) einer Scherbeanspruchung ausgesetzt, bis sich eine brillantgelbe Masse von sahneartiger Konsistenz gebildet hatte. Dies war nach einer Rührzeit von ca. 1 Stunde der Fall. Das Reaktionsprodukt ließ man während 16 Stunden in Ruhe. Im Anschluß daran wurde mit 350 ml Wasser verdünnt und während einer Stunde aufgerührt. Die Pigment-Suspension wurde auf einer Nutsche über Blauband-Filter abgesaugt und der Filterkuchen dreimal mit 200 ml Wasser gewaschen und bei 120°C getrocknet.
   Die chemische Analyse des kristallinen Materials ergab die Zusammensetzung BiVO4.
   Zur Bestimmung der Korngrößenverteilung wurden die Bismutvanadat-Kerne im Ultraschallbad in einer 0,1 %-igen Natriumhexametaphosphat-Lösung dispergiert und in einem Laserbeugungsspektrometer (Mastersizer der Firma Malvern) vermessen. Mehr als 99 Gew.-% der Kerne hatten einen Durchmesser zwischen ≥ 0,2 µm und ≤ 3,5 µm.
B) Aktivierung der Bismutvanadat-Kerne:
   Die so hergestellten Bismutvanadat-Kerne aus A) wurden in einer Menge von 100 g in 1 000 ml einer 0,1 molaren Natriumorthophosphat-Lösung dispergiert und während einer Stunde bei 90°C gerührt. Nach Abkühlen auf 50 bis 60°C wurde auf einer Nutsche über Schwarzband-Filter abgesaugt und fünfmal mit 300 ml Wasser gewaschen. Die Leitfähigkeit im letzten Waschwasser lag unter 100 µS.

### Beispiel 1

Aufbringen einer Schicht aus Aluminiumphosphat:

Der feuchte Filterkuchen aus B) wurde in 1 000 ml Wasser dispergiert, die Suspension auf 85°C erhitzt und während 15 Minuten gerührt (pH = 8,0), eine Lösung von 27,3 g Al₂(SO₄)₃ x 18 H₂O in 100 ml Wasser innerhalb von 15 Minuten der Suspension zugeführt (pH=3,3), danach eine Mischung von 9,5 g 85 %-iger Phosphorsäure und 100 ml Wasser ebenfalls innerhalb von 15 Minuten zugefügt (pH=2,3), der pH-Wert der Suspension mit 5 %-iger Natronlauge auf 6,5 eingestellt und die Suspension während 30 Minuten nachgerührt. Die beschichteten Bismutvanadat-Kerne wurden durch Absaugen abgetrennt, fünfmal mit 300 ml Wasser gewaschen und bei 120°C getrocknet.

### Beispiel 2

Aufbringen einer Schicht aus Aluminium/Zinkphosphat:

Der feuchte Filterkuchen aus B) wurde in 1 000 ml Wasser dispergiert, die Suspension auf 85°C erhitzt und während 15 Minuten gerührt (pH=8,0), eine Lösung von 11,2 g ZnSO₄ x 7 H₂O und 13,6 g Al₂(SO₄)₃ x 18 H₂O in 100 ml Wasser innerhalb von 15 Minuten der Suspension zugeführt (pH=2,9), danach eine Mischung von 7,8 g 85 %-iger Phosphorsäure und 100 ml Wasser ebenfalls innerhalb von 15 Minuten zugefügt (pH=2,2), der pH-Wert der Suspension mit 5 %-iger Natronlauge auf 6,5 eingestellt, die Suspension während 30 Minuten nachgerührt und die beschichteten Bismutvanadat-Kerne analog Beispiel 1 abgetrennt, gewaschen und getrocknet.

### Beispiel 3

Aufbringen einer Schicht aus Siliziumoxid:

Der feuchte Filterkuchen aus B) wurde in 700 ml Wasser dispergiert, die Suspension unter Rühren auf 90°C erhitzt (pH=8,0), der pH-Wert der Suspension mit 5 %-iger Natronlauge auf 10 erhöht, Wasserglaslösung (6 mol SiO₂/l und 3,6 mol NaOH/l) in einer Menge von 27,8 ml zugefügt, die Suspension während 30 Minuten bei 90°C gerührt (pH=10,2), eine Mischung aus 5,1 g 96 %-iger Schwefelsäure und 300 ml Wasser innerhalb von einer Stunde zugetropft (pH=8,0), der pH-Wert der Suspension mit 1%-iger Schwefelsäure auf 7 gesenkt, die Suspension während 30 Minuten nachgerührt und die beschichteten Bismutvanadat-Kerne analog Beispiel 1 abgetrennt, gewaschen und getrocknet.

### Beispiele 4a bis 4c

Aufbringen einer äußeren Schicht aus Dimethylpolysiloxan auf die beschichteten Kerne gemäß den Beispielen 1,2 und 3:

In einer Bloch-Rossetti-Mühle werden 100 g der gemäß den Beispielen 1,2 und 3 beschichteten Bismutvanadat-Kerne in Gegenwart von 10 g Dimethylpolysiloxan einer Viskosität von 100 mPa.s während 5 Minuten bewegt.

Zur Bestimmung der Farbdaten wurden die erfindungsgemäßen Bismutvanadat-Gelbpigmente aus den Beispielen 1 bis 4c jeweils einzeln mit einem Polyolefin (Vestolen® A 6016 der Firma Hüls AG) verschmolzen. Die Pigment-Volumen-Konzentration (PVK) betrug jeweils 1 %. Mit Hilfe einer Spritzgießmaschine wurden plattenförmige Probekörper bei 200°C hergestellt. Die Farbmessungen an den Probekörpern erfolgten nach DIN 53236, Verfahren A, mit Hilfe eines Spektralfarbmeßgerätes. Für die Auswertung wurde das CIELAB-Farbsystem nach DIN 6174 herangezogen. Als Maß für die Farbqualität diente die Gelbsättigung b*, das Chroma C*, sowie die Helligkeit L*. Alle Probekörper zeigten eine brillantgelbe Farbe. Die Farbkoordinanten b*, C* und L* erreichten Werte ≥ 85.

Zur Beurteilung der Farbstabilität wurde von jedem der Bismutvanadat-Gelbpigmente aus den Beispielen 1 bis 4c in gleicher Weise eine Serie von Probekörpern zwischen 200°C und einer verfahrensbedingten Höchsttemperatur von 320°C in Intervallen von 20°C hergestellt. Innerhalb jeder Serie wurde der Farbabstand dE* nach DIN 6174 gegenüber der entsprechenden bei 200°C gespritzten Probe ermittelt. Die Probekörper mit einem Farbabstand dE* kleiner 3 wurden als farbstabil eingestuft. Nach diesem Prüfverfahren erwiesen sich die Beispiele 4a bis 4c bis zur Höchsttemperatur von 320°C als farbstabil. Die Beispiele 1 bis 3 waren bis zu einer Temperatur von 300°C farbstabil.

Zum Vergleich wurden auch nichterfindungsgemäße Bismutvanadat-Gelbpigmente hergestellt. So wurde jedes der Beispiele 1 bis 4c in der Weise modifiziert, daß auf die Aktivierung der Bismutvanadat-Kerne mit Trinatriumphosphat verzichtet wurde. Alle anderen Schritte wurden beibehalten. Diese nichterfindungsgemäßen Pigmente wurden dann in gleicher Weise wie oben dem Hitzestabilitätstest unterworfen. Die Farbstabilität dieser Pigmente lag in keinem der Fälle höher als 280°C.

### Beispiele 5 bis 10

In weiteren nichterfindungsgemäßen Beispielen 5 bis 10 wurden Bismutvanadate mit breiter Größenverteilung hergestellt. Diese Herstellungsverfahren unterscheiden sich vom erfindungsgemäßen Herstellungsverfahren jeweils nur in einer Variablen.

Die Unterschiede gegenüber der Herstellung unter A) bestanden darin, daß in einem Beispiel 5 die Suspension einer verminderten Scherbeanspruchung durch Absenken der Rührerdrehzahl ausgesetzt wurde, daß in einem Beispiel 6 die Rührzeit über die zur Bildung von Bismutvanadat notwendige Zeit hinaus auf 2 Stunden erhöht wurde, daß in einem Beispiel 7 der Feststoff-Anteil auf 35 Gew.-% reduziert und in einem Beispiel 8 auf 50 Gew.-% erhöht wurde, daß in einem Beispiel 9 die Menge an Salptersäure auf 50 ml abgesenkt und in einem Beispiel 10 auf 70 ml erhöht wurde.

Die Korngrößenanalyse der Bismutvanadat-Kerne aus den Beispielen 5 bis 10 geschah in gleicher Weise wie bei den erfindungsgemäßen Kernen aus A). Die Beispiele 5 bis 10 ergaben gegenüber Kernen aus A) eine breitere Kernverteilung. Der Anteil an Kernen mit Durchmessern zwischen ≥ 0,2 µm und ≤ 3,5 µm verringerte sich von 99 % bis hin zu Werten unter 90 %.

Die Bismutvanadat-Kerne aus den Beispielen 5 bis 10 wurden analog B) einer Phosphat-Aktivierung und analog den Beispielen 1 bis 3 einer anorganischen Behandlung unterworfen. Die Herstellung gelbgefärbter Probekörper aus Polyolefin-Kunststoff im Temperaturbereich 200 bis 300°C sowie Farbmessung und Auswertung geschahen in gleicher Weise wie bei den Beispielen 1 bis 3. Bei den Pigmenten aus den Beispielen 5 bis 10 lag jeweils mindestens einer der Farbparameter b*, C* und L* unterhalb von 85. Im Einklang hiermit war der visuelle Farbeindruck: Die Probekörper der Beispiele 5 bis 10 wiesen einen weniger brillanten Farbton auf als die der Beispiele 1 bis 3 mit b*, C* und L* ≥ 85.

Weiterhin wurde die Farbkraft der Bismutvanadat-Gelbpigmente aus den Beispielen 1 bis 3 sowie 5 bis 10 in Gegenwart eines Weißpigments in einer Lackierung beurteilt. Hierzu wurden die gelben Bismutvanadat-Pigmente mit einem Weißpigment (Titandioxid-Pigment R-KB-2, Produkt der Bayer AG) im Gewichtsverhältnis 1:5 gemischt und mit Hilfe einer Tellerausreibmaschine in einen lufttrocknenden Lack (Alkydal® F 48, Produkt der Bayer AG) eingearbeitet. Die Pigmentkonzentration betrug 15 %. Der pigmentierte Lack wurde auf weißen Karton in deckender Schicht aufgezogen.

Die getrockneten Lackierungen der Beispiele 1 bis 3 mit Bismutvanadat-Pigmenten enger Kernverteilung waren intensiver gelbgefärbt als die der Beispiele 5 bis 10 mit Bismutvanadat-Pigmenten breiterer Kernverteilung. Die Farbbestimmung geschah nach DIN 53236, Verfahren A, in Verbindung mit DIN 6174 (Ullmanns Encyclopedia of Industrial Chemistry, Vol. A 20, page 246, table 1, pages 258-259, 262-263). Als Maß für die Farbstärke dienten die Gelbsättigung b* und das Chroma C*. Die Werte für b* und C* lagen bei den erfindungsgemäßen Proben oberhalb von 40 und bei den nicht erfindungsgemäßen Proben unterhalb von 40.

## Patentansprüche

1. Beschichtete Bismutvanadat-Gelbpigmente aus einem Kern eines gelbfärbenden Bismutvanadates, dadurch gekennzeichnet, daß der Kern eine mit einer phosphathaltigen Verbindung aktivierte Oberfläche aufweist sowie eine Umhüllung, die mindestens eine Schicht aus Aluminiumphosphat oder Aluminium/Zinkphosphat oder Siliziumoxid und gegebenenfalls als weitere Schicht Aluminiumoxid und/oder ein Organopolysiloxan enthält, und daß mehr als 99 Gew.-% der gelbfärbenden Kerne einen Durchmesser zwischen ≥ 0,2 µm und ≤ 3,5 µm aufweisen.

2. Bismutvanadat-Gelbpigmente gemäß Anspruch 1, dadurch gekennzeichnet, daß als Umhüllung eine innere Siliziumoxidschicht und eine äußere Aluminiumoxidschicht vorliegen.

3. Bismutvanadat-Gelbpigmente gemäß Anspruch 1, dadurch gekennzeichnet, daß als Umhüllung eine innere Aluminiumphosphatschicht und eine äußere Organopolysiloxanschicht vorliegen.

4. Bismutvanadat-Gelbpigment gemäß Anspruch 1, dadurch gekennzeichnet, daß als Umhüllung eine innere Aluminium/Zinkphosphatschicht und eine äußere Organopolysiloxanschicht vorliegen.

5. Bismutvanadat-Gelbpigmente gemäß Anspruch 1, dadurch gekennzeichnet, daß als Umhüllung eine innere Siliziumoxidschicht und eine äußere Organopolysiloxanschicht vorliegen.

6. Bismutvanadat-Gelbpigmente gemäß Anspruch 1, dadurch gekennzeichnet, daß als Umhüllung eine Siliziumoxidschicht, eine Aluminiumoxidschicht und eine Organopolysiloxanschicht vorliegen.

7. Bismutvanadat-Gelbpigmente gemäß einem oder mehreren der Ansprüche 1 bis 6, dadurch gekennzeichnet, daß als Organopolysiloxan Dimethylpolysiloxan eingesetzt wird.

8. Bismutvanadat-Gelbpigmente gemäß einem oder mehreren der Ansprüche 1 bis 6, dadurch gekennzeichnet, daß als phosphathaltige Verbindung Alkaliphosphate, insbesondere Trinatriumphosphat eingesetzt wird.

9. Verfahren zur Herstellung der Bismutvanadat-Gelbpigmente nach den Ansprüchen 1 bis 8, dadurch gekennzeichnet, daß salpetersaure Suspensionen aus Bismutylnitrat und Vanadium(V)oxid oder Bismut(III)oxid und Vanadium(V)oxid einer intensiven Scherbeanspruchung unterworfen werden, das dabei entstandene Bismutvanadat nach einer Ruhephase abfiltriert und gewaschen wird, das feuchte Bismutvanadat in einer heißen, phosphathaltigen, wäßrigen Lösung zur Aktivierung der Oberfläche dispergiert wird, anschließend abfiltriert und gewaschen wird, anschließend auf das aktivierte Bismutvanadat in Suspension mindestens ein wasserhaltiges Aluminiumphosphat und/oder Aluminium/Zinkphosphat und/oder Siliziumoxid in einer oder mehreren Schichten - gegebenenfalls in Kombination mit einem oder mehreren Oxiden von zweiwertigen und/oder dreiwertigen und/oder vierwertigen und/oder fünfwertigen und/oder sechswertigen Elementen und/oder einem oder mehreren Phosphaten von zweiwertigen und/oder dreiwertigen und/oder vierwertigen Elementen - aufgefällt wird, dieses so beschichtete Bismutvanadatpigment filtriert, gewaschen und getrocknet wird und gegebenenfalls mit einem Organopolysiloxan und/oder Aluminiumoxid nachbehandelt wird.

10. Verfahren gemäß Anspruch 9, dadurch gekennzeichnet, daß in eine 17 bis 22 gew.-%ige, vorzugsweise 19 bis 20 gew.-%ige, wäßrige Salpetersäure Bismutylnitrat und Vanadium(V)oxid oder in eine 32 bis 37 gew.-%ige, vorzugsweise 34 bis 35 gew.-%ige, wäßrige Salpetersäure Bismut(III)oxid und Vanadium(V)oxid im Molverhältnis Bismut zu Vanadium zwischen 1,16 und 1,20, vorzugsweise 1,18, gegeben werden, so daß der Feststoffanteil zwischen 40 und 47 Gew.-%, vorzugsweise zwischen 41 und 43 Gew.-%, liegt, und daß die so erhaltene Suspension intensiv gerührt wird.

11. Verfahren gemäß Anspruch 9, dadurch gekennzeichnet, daß nach der Aktivierung der Oberfläche auf das Bismutvanadat Aluminium/Zinkphosphat aufgefällt wird, indem zur Aluminiumsulfat- und Zinksulfathaltigen Bismutvanadatsuspension wäßrige Phosphorsäure gegeben wird und anschließend mit verdünnter Natronlauge der pH-Wert der Suspension erhöht wird.

12. Verfahren gemäß Anspruch 9, dadurch gekennzeichnet, daß nach der Aktivierung auf das Bismutvanadat in Natriumsilikat-haltiger, alkalischer Suspension durch Erniedrigung des pH-Wertes mit wäßriger Schwefelsäure Siliziumoxid in neutralem bis schwachalkalischem Medium und gegebenenfalls danach durch Zugabe einer wäßrigen Aluminiumsulfat-Lösung und Erhöhung des pH-Wertes mit verdünnter Natronlauge Aluminiumoxid in neutralem bis schwachsaurem Medium aufgefällt wird.

13. Verfahren gemäß Anspruch 9, dadurch gekennzeichnet, daß nach der Aktivierung auf das Bismutvanadat in Aluminiumsulfat-haltiger Suspension durch Zugabe wäßriger Phosphorsäure und Erhöhung des pH-Wertes mit verdünnter Natronlauge Aluminiumphosphat in neutralem bis schwachsaurem Medium aufgefällt wird.

14. Verwendung der beschichteten Bismutvanadat-Gelbpigmente nach den Ansprüchen 1 bis 8 zur Einfärbung von Polyolefin-Kunststoffen und Lacken.

## Claims

1. Coated bismuth vanadate yellow pigments made from a core of a yellow-colouring bismuth vanadate, characterised in that the core has a surface activated with a phosphate-containing compound and a coating which contains at least one layer of aluminium phosphate or aluminium/zinc phosphate or silicon oxide and optionally aluminium oxide and/or an organopolysiloxane as a further layer, and that more than 99 wt.% of the yellow-colouring cores have a diameter between ≥ 0.2 µm and ≤ 3.5 µm.

2. Bismuth vanadate yellow pigments according to Claim 1, characterised in that the coating has an internal silicon dioxide layer and an external aluminium oxide layer.

3. Bismuth vanadate yellow pigments according to Claim 1, characterised in that the coating has an internal aluminium phosphate layer and an external organopolysiloxane layer.

4. Bismuth vanadate yellow pigments according to Claim 1, characterised in that the coating has an internal aluminium/zinc phosphate layer and an external organopolysiloxane layer.

5. Bismuth vanadate yellow pigments according to Claim 1, characterised in that the coating has an internal silicon oxide layer and an external organopolysiloxane layer.

6. Bismuth vanadate yellow pigments according to Claim 1, characterised in that the coating has a silicon oxide layer, an aluminium oxide layer and an organopolysiloxane layer.

7. Bismuth vanadate yellow pigments according to one or more of Claims 1 to 6, characterised in that dimethylpolysiloxane is used as an organopolysiloxane.

8. Bismuth vanadate yellow pigments according to one or more of Claims 1 to 6, characterised in that the phosphate-containing compound used is an alkali metal phosphate, in particular trisodium phosphate.

9. A process for producing the bismuth vanadate yellow pigments according to Claims 1 to 8, characterised in that suspensions in nitric acid of bismuthyl nitrate and vanadium(V) oxide or bismuth(III) oxide and vanadium(V) oxide are subjected to intensive shear strain, the bismuth vanadate produced, after a settling period, is filtered off and washed, the moist bismuth vanadate is dispersed in a hot, phosphate-containing, aqueous solution to activate the surface, then filtered off and washed, then at least one hydrated aluminium phosphate and/or aluminium/zinc phosphate and/or silicon oxide is precipitated onto the activated bismuth vanadate in suspension in one or more layers, optionally in combination with one or more oxides of divalent and/or trivalent and/or tetravalent and/or pentavalent and/or hexavalent elements and/or one or more phosphates of divalent and/or trivalent and/or tetravalent elements, the bismuth vanadate pigment coated in this way is then filtered, washed and dried and optionally aftertreated with an organopolysiloxane and/or aluminium oxide.

10. A process according to Claim 9, characterised in that bismuthyl nitrate and vanadium(V) oxide are added to 17 to 22 wt.% strength, preferably 19 to 20 wt.% strength aqueous nitric acid or bismuth(III) oxide and vanadium(V) oxide are added to 32 to 37 wt.% strength, preferably 34 to 35 wt.% strength aqueous nitric acid, the molar ratio of bismuth to vanadium being between 1.16 and 1.20, preferably 1.18, so that the proportion of solids is between 40 and 47 wt.%, preferably between 41 and 43 wt% and that the suspension obtained in this way is intensively stirred.

11. A process according to Claim 9, characterised in that, after activation of the surface, aluminium/zinc phosphate is precipitated onto the bismuth vanadate by adding aqueous phosphoric acid to the bismuth vanadate suspension which contains aluminium and zinc sulphate and then increasing the pH of the suspension with dilute caustic soda solution.

12. A process according to Claim 9, characterised in that, after activation silicon oxide is precipitated onto the bismuth vanadate in neutral to weakly alkaline medium in a sodium silicate-containing, alkaline suspension by lowering the pH with aqueous sulphuric acid and optionally aluminium oxide is then precipitated in neutral to weakly acid medium by adding an aqueous aluminium sulphate solution and raising the pH with dilute caustic soda solution.

13. A process according to Claim 9, characterised in that, after activation aluminium phosphate is precipitated onto the bismuth vanadate in neutral to weakly acidic medium in an aluminium sulphate-containing suspension by adding aqueous phosphoric acid and raising the pH with dilute caustic soda solution.

14. Use of the coated bismuth vanadate yellow pigments according to Claims 1 to 8 to colour polyolefin plastics and lacquers.

## Revendications

1. Pigments jaunes de vanadate de bismuth enduits, constitués par un noyau d'un vanadate de bismuth colorant en jaune, caractérisés en ce que le noyau présente une surface activée avec un composé phosphaté, ainsi qu'une enveloppe qui contient au moins une couche de phosphate d'aluminium ou de phosphate d'aluminium/zinc ou encore d'oxyde de silicium et éventuellement, à titre de couche supplémentaire, de l'oxyde d'aluminium et/ou un organopolysiloxane, et en ce que plus de 99% en poids des noyaux colorant en jaune présentent un diamètre entre ≥ 0,2 µm et ≤ 3,5 µm.

2. Pigments jaunes de vanadate de bismuth selon la revendication 1, caractérisés en ce que sont présentes, à titre d'enveloppe, une couche interne d'oxyde de silicium et une couche externe d'oxyde d'aluminium.

3. Pigments jaunes de vanadate de bismuth selon la revendication 1, caractérisés en ce que sont présentes, à titre d'enveloppe, une couche interne de phosphate d'aluminium et une couche externe d'organopolysiloxane.

4. Pigments jaunes de vanadate de bismuth selon la revendication 1, caractérisés en ce que sont présentes, à titre d'enveloppe, une couche interne de phosphate d'aluminium/zinc et une couche externe d'organopolysiloxane.

5. Pigments jaunes de vanadate de bismuth selon la revendication 1, caractérisés en ce que sont présentes, à titre d'enveloppe, une couche interne d'oxyde de silicium et une couche externe d'organopolysiloxane.

6. Pigments jaunes de vanadate de bismuth selon la revendication 1, caractérisés en ce que sont présentes, à titre d'enveloppe, une couche d'oxyde de silicium, une couche d'oxyde d'aluminium et une couche d'organopolysiloxane.

7. Pigments jaunes de vanadate de bismuth selon une ou plusieurs des revendications 1 à 6, caractérisés en ce qu'on met en oeuvre, comme organopolysiloxane, le diméthylpolysiloxane.

8. Pigments jaunes de vanadate de bismuth selon une ou plusieurs des revendications 1 à 6, caractérisés en ce qu'on met en oeuvre, à titre de composé phosphaté, des phosphates de métaux alcalins, en particulier le phosphate trisodique.

9. Procédé pour la préparation des pigments jaunes de vanadate de bismuth selon les revendications 1 à 8, caractérisé en ce qu'on soumet des suspensions dans de l'acide nitrique constituées par du nitrate de bismuthyle et de l'oxyde de vanadium(V) ou par de l'oxyde de bismuth(III) et de l'oxyde de vanadium(V) à une sollicitation intense au cisaillement, on sépare par filtration le vanadate de bismuth obtenu en l'occurrence après une phase de repos et on le lave, on disperse le vanadate de bismuth humide dans une solution aqueuse chaude contenant du phosphate à des fins d'activation de la surface, puis on sépare par filtration et on lave, on précipite ensuite sur le vanadate de bismuth activé, en suspension, au moins un phosphate d'aluminium et/ou un phosphate d'aluminium/zinc et/ou de l'oxyde de silicium aqueux en une ou plusieurs couches - éventuellement en combinaison avec un ou plusieurs oxydes d'éléments bivalents et/ou trivalents et/ou tétravalents et/ou pentavalents et/ou hexavalents, et/ou avec un ou plusieurs phosphates d'éléments bivalents et/ou trivalents et/ou tétravalents -, on filtre ce pigment de vanadate de bismuth ainsi enduit, on le lave et on le sèche et, le cas échéant, on le soumet à un traitement ultérieur avec un organopolysiloxane et/ou un oxyde d'aluminium.

10. Procédé selon la revendication 9, caractérisé en ce qu'on ajoute, dans un acide nitrique aqueux à concurrence de 17 à 22% en poids, de préférence de 19 à 20% en poids, du nitrate de bismuthyle et de l'oxyde de vanadium(V) ou encore dans un acide nitrique aqueux à concurrence de 32 à 37% en poids, de préférence de 34 à 35% en poids, de l'oxyde de bismuth(III) et de l'oxyde de vanadium(V), dans un rapport molaire du bismuth au vanadium entre 1,16 et 1,20, de préférence égal à 1,18, de telle sorte que la fraction de substance solide se situe entre 40 et 47% en poids, de préférence entre 41 et 43% en poids, et de telle sorte que l'on agite fortement la suspension ainsi obtenue.

11. Procédé selon la revendication 9, caractérisé en ce que, après l'activation de la surface, on précipite du phosphate d'aluminium/zinc sur le vanadate de bismuth en ajoutant de l'acide phosphorique aqueux à la suspension de vanadate de bismuth contenant du sulfate d'aluminium et du sulfate de zinc, et en élevant ensuite la valeur de pH de la suspension avec de la lessive de soude diluée.

12. Procédé selon la revendication 9, caractérisé en ce que, après l'activation, sur le vanadate de bismuth en suspension alcaline contenant du silicate de sodium, par diminution de la valeur de pH avec de l'acide sulfurique aqueux,on précipite de l'oxyde de silicium dans un milieu neutre à faiblement alcalin et éventuellement, par la suite, par addition d'une solution aqueuse de sulfate d'aluminium et augmentation de la valeur de pH avec de la lessive de soude diluée, on précipite de l'oxyde d'aluminium dans un milieu neutre à faiblement acide.

13. Procédé selon la revendication 9, caractérisé en ce que, après l'activation, sur le vanadate de bismuth en suspension contenant du sulfate d'aluminium, par addition d'acide phosphorique aqueux et augmentation de la valeur de pH avec de la lessive de soude diluée, on précipite du phosphate d'aluminium dans un milieu neutre à faiblement acide.

14. Utilisation des pigments jaunes de vanadate de bismuth enduits selon les revendications 1 à 8, pour la coloration de matières synthétiques de polyoléfines et de laques, de vernis ou de peintures.
